# EUROPEAN PATENT APPLICATION

(11) **EP 4 818 585 A1**
(43) Date of publication of application: **07.10.2026**
(21) Application number: 25390001.3
(22) Date of filing: 03.04.2025
(51) Int. Cl.: F24D 3/14, E04C 2/52, E04F 13/074, E04F 15/00, E04F 15/20, F24D 13/02, H05B 3/14

(54) **UNDERFLOOR HEATING SYSTEM WITH HEAT DECOUPLING, SYSTEM MANUFACTURING KIT AND METHOD FOR ITS USE**

(71) Applicant: Schoentag, Moritz, 4047 Limassol (CY); Furtmayr, Christian, 7544 Tobaj (AT)
(72) Inventor: Schoentag, Moritz, 4047 Limassol (CY); Furtmayr, Christian, 7544 Tobaj (AT)
(74) Representative: Stylianou Mylona, Zenovia

(57) **Abstract**

The present invention relates to a heating system that can be easily installed on the floor (subfloor or old floor covering) and uses the generated heat energy more efficiently to heat a room than traditional underfloor heating systems. This is done by using a heating element, which preferably has a large effective heating surface (at least 85% of the heating element) based on a carbon coating, and the special heat decoupling. The heat decoupling element consists of the combination of the insulation-impact-sound-spacer-element and the reflection element which is situated underneath. This inventive structure allows the heat energy generated by the heating element to be reflected at the reflection element and thus, in contrast to conventional underfloor heating structures, minimizes the flow of heat towards the subfloor. As a result, a large portion of the generated heat energy by the heating element reaches the floor covering, where it can be used to heat the room. This invention leads to:
• Minimizing heat losses into the subfloor/subfloor
• Maximizing the use of the generated heat energy for room heating
• As a result: Shorter heating rates of the floor covering
• As a result: Lower consumption values
• As a result: Lower resource requirements

## Description

### Field of the invention

The present invention relates to a heating system that is particularly suitable for heating a room (for example a room of a house) by controlling the temperature of the floor covering. The special feature of this invention lies in the combination of different material layers, which maximizes the heat flow towards the floor covering and at the same time minimizes heat losses in the subfloor below. This underfloor heating with the resulting heat decoupling enables faster heating rates with reduced energy consumption.

### Background

Heating rooms is necessary in many situations in order to achieve viability and comfort for people. An efficient way of doing this is to evenly heat the floor, whereby the heat supplied to the floor covering evenly heats all objects in the room using the principle of thermal radiation. This primarily heats all objects and surfaces in the room that contain mass (furniture, walls, ceiling, etc.), and secondarily the room air, which is warmed by coming into contact with the heated objects. The aim of every type of underfloor heating is the same: to heat the floor covering to generally 20°C to 24°C with the lowest possible energy consumption, since the floor covering is the contact surface with the room through which the radiant heat is emitted into the room. Up to now, underfloor heating has been implemented directly electrically, with meandering heating wires, with heating foils or by means of water-carrying pipe systems through which heated water flows. The water can be heated electrically or by burning various materials or by using solar radiation. These underfloor heating systems are usually covered with a layer of screed, so that a level floor structure is created.

The problem or disadvantage with these used to date types of heating is energy efficiency. A large proportion of heat energy must be used to first heat up the spaces between the meanders or parallel flowing heating elements (electric or water-based) and the subfloor also heats up through heat conduction. This leads to excessive heat energy inputs into the subfloor, where the warmth cannot be used in order to bring the room temperature to the desired level. Some heating systems use insulation layers underneath the heating element to slow down the flow of heat towards the subfloor. However, this can only delay the flow of heat in a timely manner (depending on the thickness of the insulation material and its thermal conductivity) and cannot prevent it. There are also systems in which electrical heating wires or water-conducted pipe systems are applied in a meandering shape onto aluminum layers laid over the entire surface, so that the effective heating surface, which represents the area of the heating wire or the area of the pipe system (relatively small in relation to the room area), is increased. Aluminum is a good conductor of heat, but this also means that heat is not only absorbed quickly, but also released. An increase of the (relatively small) effective heating surface can therefore not occur in this way. This fact can easily be demonstrated by using a thermographic camera. In the same example heat reflection cannot occur either if the heating element is laid onto a reflective layer (for example aluminum), since a radiation level between the heating layer and the reflection layer is always required for this heat transfer principle to function.

In summary: The aim of underfloor heating is to heat the floor covering. If the heating element is placed directly onto the subfloor, heat flows into it via heat conduction and valuable heat energy is lost or cannot be used to heat the room. Insulation delays the flow of heat, but does not prevent it. The present invention is intended to solve this problem and direct the majority of the heat energy into the floor covering.

### Summary of the invention

The objective of the present invention is to provide a heating system that can be easily installed on the floor (subfloor or old floor covering) and uses the heat energy provided more efficiently to heat the room than previous underfloor heating systems.

This objective is described in the patent claims according to the invention. The inventors have found that by combining several measures, thermal decoupling from the subfloor and thus a more efficient distribution of the heat energy provided for heating a room can be achieved.

In a first aspect, the invention relates to a heating system for heating a room comprising (i) a reflection element which is applied to the subfloor and is equipped to close cold bridges to the subfloor and in particular to reflect infrared radiation, (ii) an insulation-impact-sound-spacer-element which minimizes impact sound towards the subfloor, delays heat flow by heat conduction from the heating element in the direction towards the subfloor and in particular simulates a stagnant air layer due to its structure of mostly air-enclosing bubbles/chambers, and (iii) a heating element which, in a preferred embodiment, is equipped with a carbon coating in order to be able to generate full-surface infrared radiation.

Particularly suitable as floor coverings are (real wood) parquet, laminate, vinyl, linoleum, ceramic coverings such as tiles or brick screed, cement screed, stone carpet, resin cast floors and all other coverings that can be used for a floor covering.

In a second aspect, the invention provides a kit for producing an underfloor heating which contains the following components:
i) A reflection element which is applied to the subfloor and is equipped to close cold bridges to the subfloor and in particular to reflect infrared radiation.
ii) An insulation-impact-sound-spacer-element which minimises impact sound towards the subfloor, delays heat flow via heat conduction from the heating element towards the subfloor and in particular simulates a stagnant air layer through its structure of mostly air-enclosing bubbles/chambers.
iii) A heating element which, in a preferred embodiment, is equipped with a carbon coating in order to be able to generate full-surface infrared radiation. Die Komponenten i) und ii) können innerhalb eines Elements kombiniert werden.

Als Bodenbelag geeignet sind insbesondere (Echtholz-)Parkett, Laminat, Vinyl, Linoleum, keramische Beläge wie Fliesen oder Ziegelestrich, Zementestrich, Steinteppich, Harzgussböden und alle weiteren Beläge, welche für einen Bodenbelag verwendet werden können.

In a third aspect, the invention provides a method for producing an underfloor heating system which comprises of the following steps:
a) Attaching a reflection element to the subfloor of a room, which is equipped to close cold bridges to the subfloor and in particular to reflect infrared radiation.
b) Attaching an insulation-impact-sound-spacer-element above the reflection element, which is equipped to minimize impact sound, delay heat flow via heat conduction from the heating element towards the subfloor and in particular to simulate a stagnant air layer through its structure of mostly air-enclosing bubbles/chambers.
c) Attaching a heating element above the insulation-impact-sound-spacer-element, which in a preferred embodiment is equipped with a carbon coating in order to be able to generate full-surface infrared radiation.
d) Attaching a protective element when used in wet rooms, which can be connected to the grounding of a house.

The installation of various floor coverings can be carried out in a floating or glued version. In some cases, it is advisable to use decoupling layers between the heating system according to the invention and the floor covering.

In a fourth aspect, the invention provides a method for heating a room comprising the following steps:
a) Attaching a reflection element to the subfloor of a room, which is equipped to close cold bridges to the subfloor and in particular to reflect infrared radiation.
b) Attaching an insulation-impact-sound-spacer-element above the reflection element, which is equipped to minimize impact sound, delay heat flow via heat conduction from the heating element towards the subfloor and in particular to simulate a stagnant layer of air through its structure of mostly air-enclosing bubbles/chambers.
c) Attaching a heating element above the insulation-impact-sound-spacer-element, which in a preferred design is equipped with a carbon coating in order to be able to generate full-surface infrared radiation.
d) Attaching a protective element when used in wet rooms, which can be connected to the grounding of a house.
e) Operating the heating element.

### Heating system

### Heating element

In principle, any heating system that is capable of generating infrared radiation with which a room can be heated can be used according to the invention. Examples of heating systems can have water-carrying pipes through which previously heated water flows or electrical heating systems in which heat radiation is generated by the flow of current through, for example, a meandering (copper) heating wire or through a heating layer, for example with a carbon-based conductivity additive. The heating system according to the invention preferably contains of at least one continuously applied, carbon-based conductivity additive that can be operated in the range between 5V and 230V.

In a preferred embodiment, a carbon-based heating layer is applied to one of the main sides of the substrate. Main sides in this context are the sides that span the largest area. The side on which the heating layer is applied to the substrate is called the main side, the side opposite this is called the second side. In particular, when heating foils are used in which a carbon-based conductivity additive is used, it may be the case that the heating layer is located in the middle of the substrate, since PET, urethane or other materials are laminated on both sides, above and below the heating layer. In an alternative embodiment, a heating layer is applied to each of the two main sides of the substrate, which is equipped to generate IR radiation.

Preferably, the heating element is constructed in such a way that infrared radiation can be emitted in any direction and no reflective layers, such as aluminum layers, are applied.

In an electrical heating layer, the heat is generated by applying an electrical voltage. In a preferred embodiment, the heating element consists of at least one carbon-based conductivity additive, which is applied continuously to the main side of the substrate and ideally extends over at least 85% of the area of the main side of the substrate. Carbon-based conductivity additives, similar to graphene, have excellent electrical conductivity (graphene: 100*10^6 S/m) as well as very high thermal conductivity values (graphene: 5,300 W/mK). In conjunction with a relatively large effective heating surface (preferably at least 85% of the total surface of the heating element), the heating element can 1. convert electrical current into heat very efficiently, 2. heat a relatively large area in relation to the room area homogeneously (especially compared to water-based heating systems or meandering heating wires), 3. transfer the generated heat towards the floor covering due to the high thermal conductivity and 4. heat the room in a matter of minutes using thermal radiation due to the large effective heating surface. Of particular importance in this case is the relatively large heating surface of the heating element in relation to the room area, as this allows a far larger proportion of thermal energy to be directly transferred into the floor covering than can be the case with water-based pipe systems or other electrical systems such as those with heating wires or non-continuously applied, carbon-based conductivity additives. The heat radiation output can be calculated according to the thermal radiation law according to Stefan and Bolzmann.

In order to be able to apply a voltage to the heating layer, particularly in the preferred case of a heating layer which contains a carbon-based conductivity additive, the heating element preferably has two electrically conductive contact elements. The connection of the contact elements to a voltage source must be carried out in accordance with applicable standards and regulations which are known to the person skilled in the art.

The heating layer can be applied to a substrate in a manner known per se. For example, a dispersion containing the at least one carbon-based conductivity additive can be applied to the substrate by rolling, spraying, painting, brushing, doctoring, spatula or printing, with printing being preferred. The dispersion can be applied in one step (i.e. in just one print) or in two or more steps (i.e. in two or more coats/prints), with a drying step between each application in the latter case. If necessary, a primer layer can be created on the substrate before the heating layer is applied. This is particularly advantageous in order to reduce the absorbency of the substrate and/or to ensure a consistent surface quality of the substrate. Thus, in one embodiment, the heating element, in particular the electrical heating element, such as a heating element having a heating layer containing at least one carbon-based conductivity additive, can have a primer layer between the heating layer and the substrate. One or more additional layers (such as a leveling layer to compensate for unevenness and/or a protective layer, e.g. a protective varnish, and/or a layer of paint) can be applied to the heating layer. In one embodiment, the protective or leveling layer can electrically insulate the heating layer. The protective or leveling layer is advantageously thermally conductive and, if necessary, also electrically insulating.

In the preferred case of the heating element in the form of a heating film, in which the heating layer consists of at least one carbon-based conductivity additive printed throughout, the heating layer is located in the middle of the substrate, coated by at least two laminate layers (above and beneath) which have an electrically insulating effect and ensure the moisture resistance of the heating element. The heating layer can be applied over the entire surface of the substrate or inside the substrate. The area covered by the heating layer on the substrate is not limited, except by the dimensions of the respective substrate.

To apply a voltage, particularly to an electrical heating element, the heating element preferably has two electrically conductive contact elements. The contact elements can in particular be contact strips or contact bands. In one embodiment, the two electrically conductive contact elements comprise electrically conductive metal strips, in particular electrically conductive copper strips, which can be supported by silver strips, or other electrically and thermally conductive materials. The total thickness of each contact element can preferably be a maximum of 100 µm. In one embodiment, the contact elements can be designed as straight strips. In a preferred case, the contact elements have a width of 10 mm to 20 mm, but can also reach widths of 80 mm. The electrically conductive contact elements preferably extend over the entire length of the heating layer. This has the advantage that current can flow through the heating layer over its entire length, thus maximizing the effective heating surface of the heating element.

Ideally, two electrically conductive materials are used as contact elements one above the other. An ideal design is the combination of a silver conductive strip arranged under a copper conductive strip (each 15mm wide). This combination increases the mechanical resistance of the copper conductive strip, which minimizes the likelihood of hot spots that can be caused by bending. In addition, this combination creates a double transfer area for the electrical voltage or electrical current from the contact elements to the carbon coating. This leads to increased resistance of the heating element, thus increasing its service life and minimizing the risk of failure. In addition, this combination of contact materials can simplify the electrical connection using connection terminals.

The contact elements are located on the side edge areas of the substrate and always run in a parallel direction and preferably at a distance of 15 mm from the edge in the longitudinal direction of the substrate.

Between the contact elements is the preferably printed heating layer, which contains at least one carbon-based conductivity additive.

The electrical connection can be done with any connection system that is suitable for electrically connecting a contact element to an electrical wire. Such electrical connections are known to those skilled in the art and include, for example, a plug-in, soldered or press connection, whereby the soldered connection can optionally also have an adhesive (e.g. with a resin adhesive or similar). Preferably, connection terminals are used which touch the copper conductor strip on both sides (from above and below) and can establish a direct connection with the copper conductor strip by means of "teeth" applied or stamped on both sides of the terminal connector by pressing with special pliers. In addition, cables can be connected to the connection terminals. This connection to cables can be established via press connections or solder connections, whereby press connections are preferred.

Adequate electrical insulation of the connection points is essential to ensure safe and long-lasting operation. The connection terminals are therefore insulated on both sides (top and bottom) with butyl or butyl-like materials so that the connection terminal is completely covered with butyl or similar, suitable materials on both sides. One advantage of the butyl material is that it vulcanizes and also has excellent insulation properties. Other insulation options known to those skilled in the art, such as shrink tubing, are also possible.

In particular, when using heating foils where the heating layer consists of at least one carbon-based conductivity additive printed throughout, it must be ensured that all edges or similar current-carrying points are electrically insulated. This is done in a manner known to those skilled in the art and means that no current-carrying points can be touched. It must also be ensured that leakage currents cannot occur.

### Insulation-impact-sound-spacer-element

Another component included in the heating system according to the invention is the Insulation-impact-sound-spacer-element. This component serves the following requirements:
1. Insulation by forming a stagnant air layer, which leads to excellent insulation properties (λ of stagnant air ≈ 0.025 W/(m·K)).
2. Reduction of impact sound for use in residential buildings.
3. Creation of an installation level for the electrical connections and cable routing.
4. Creation of a reflection level: A distance must be created between the reflection component and the heating element, since reflection of thermal radiation can only work if there is either a vacuum or a layer of air between the heating element and the reflection level. If the heating element lies directly on the reflection layer, heat conduction prevails almost exclusively.

In general, any materials and structures can be used in the inventive sense as long as they meet the requirements described above. These can, for example, consist of or be combined with: triangles, tetragons, pentagons, hexagons, other polygons, foam foils, air layers between spacers made of different materials with impact sound-reducing cover layers, metallic components, wooden components, plastic components, ceramic components, etc.

In practice, two designs have proven to be particularly suitable in accordance to the invention in tests carried out by the inventors:
a) Insulation-impact-sound-spacer-element based on a foam film with a hardcover coating: This is a 2-5mm thick film made of foamed polyethylene with a hardcover coating made of polypropylene on the top. When foamed polyethylene is used, a large number of air chambers are created, meaning that a large part of the volume, at least 60%, consists of air, thus simulating a stagnant layer of air.
   The hardcover coating on the top made of polyethylene is crucial for functionality in the sense of the invention. This ensures that the pressure from above is evenly distributed by the floor covering, furniture, people, etc. and that the layer thickness of this component remains. Without this hardcover coating, the effect would be the same as with conventional impact sound films: they are compressed when pressure is applied from above, air is pressed out of the film and a thin plastic layer remains, which does not meet the above-mentioned requirements according to the invention. Experience has shown that this element made of foamed polyethylene with a hardcover coating made of polypropylene is ideal for this application in the sense of the invention. It has an insulating effect, reduces impact noise, creates a reflection level and offers an installation level for connection terminals and cable guides.
   In addition, the hardcover coating is an important factor for the needed pressure stability when installing floating or glued floor coverings.
   b) b) Insulating impact sound spacer element based on honeycomb core elements: These are usually plate-shaped elements, the core of which in a preferred design consists of hexagonal honeycomb elements. The honeycombs can also consist of triangles, tetragons, pentagons, and other polygons. This honeycomb structure can consist of any material. In a preferred application, these consist of paper-like materials based on wood, or of plastics. The advantage of using hexagonal honeycomb elements is 1. the high stability and compressive strength of this structure and 2. the high number of air-filled chambers. The cell width of a honeycomb can vary between 2mm and several centimeters, but should ideally not exceed 60mm. The top and in many cases also the bottom of the element has one or more carrier layers with impact sound-reducing properties such as groundwood cardboard or plastics. If the underside is also equipped with one or more carrier layers, it is essential, in accordance with the invention, that this carrier layer is equipped with a reflective layer on its upward-facing side. This is the only way to reflect the heat radiation emitted by the heating element, which enables the generated heat energy to be used more effectively for heating the room.

This element based on honeycomb core elements meets all the requirements of the invention in the best possible way: It has an insulating effect due to the air-filled chambers, reduces impact sound, creates a reflection level and offers an installation level for connection terminals and cable guides.

In this embodiment with honeycomb core elements, in combination with heating element and reflection element, the entire structure according to the invention can also be represented in a "heating plate": The honeycomb core element forms the base, on the underside there is a carrier layer with a reflective layer pointing upwards (can also be realized without a carrier layer) and on the top of the honeycomb core element there is the heating element under a suitable carrier layer (the heating element can also be located above the carrier element here). The connection terminals can be sunk into the honeycomb core element and the individual heating elements can be connected to one another via plug-in, crimp or solder connections.

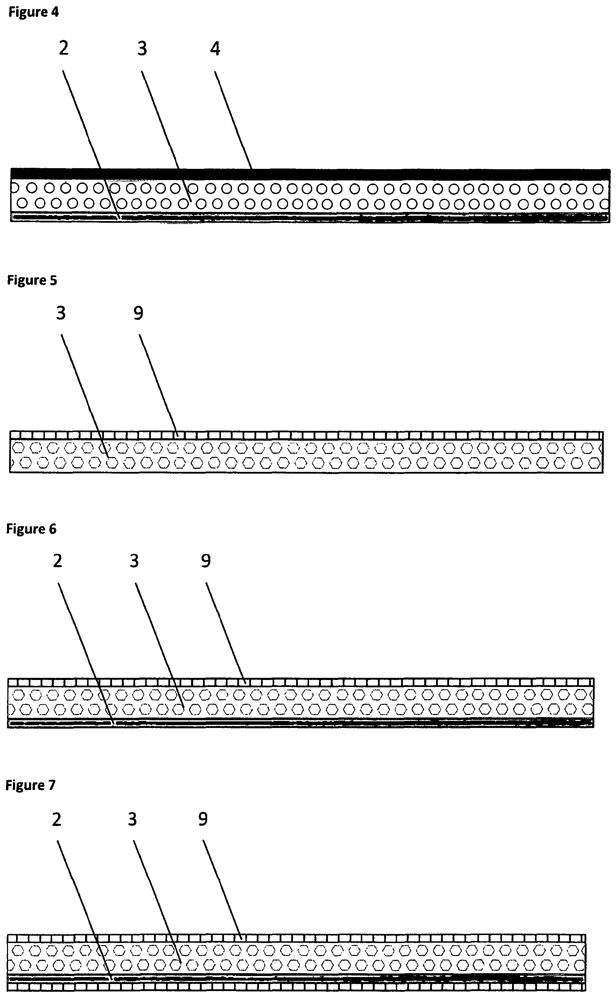

The different construction variants can be seen in Figures 5 to 13.

### Reflection element

Another component included in the heating system according to the invention is the reflection element. The reflection element has the task of reflecting the heat radiation emitted by the heating element, which is directed towards the subfloor, so that the majority of the emitted heat reaches the floor covering, according to the emission coefficient of the material used as the reflection element. In principle, any structure that is able to reflect infrared radiation can be used for this. According to the invention, an emission coefficient of a maximum of 0.1, preferably less, is preferred for this. The structure can be multi-layered and consist of several materials, as long as the top layer has a reflective effect. The reflection element can also be designed in a diffusion-open or diffusion-tight form.

Any layer that is suitable for reflecting infrared radiation can be used as the reflective layer. Examples of the reflective layer include a foil made of aluminum (especially pure aluminum), aluminum composite foils, aluminum-vaporized foils, aluminum bubble wrap, aluminum-coated building boards based on any material, aluminum composite foils, double-coated aluminum-coated composite foils and any other designs made of materials that allow reflection of thermal radiation according to the invention.

The reflective element can be applied to the floor in a manner known per se. For example, the reflective element can be fixed to the floor using an adhesive tape. In addition, the reflective element can be equipped with double-sided adhesive strips so that individual strips remain in position or, in the case of diffusion-tight designs, a vapor barrier is created.

### Protective element

For operation in wet rooms, the use of a protective layer is required which can be connected to the building's grounding. This can be produced in a known manner using various known grounding elements above the heating element. In a preferred embodiment, a carbon-based protective film can be laid above the heating element and connected to the grounding. These connections can be made in various ways known to those skilled in the art, such as clamp connections.

### Control element and other optional components

The control element optionally included in the heating system according to the invention has the task of controlling the heating system in such a way that the temperature desired and set by the user is established in the room. The control element is installed between the house power supply (typically 230 V AC) and the heating system. Other optional components of the heating system according to the invention are electrical cables that connect the control system to the contact elements of the heating system. The electrical cables must be laid in accordance with the guidelines and standards known to those skilled in the art. The electrical cables can preferably be hidden, i.e. laid in the insulation-impact-sound-spacer-element between the reflection element and the heating element. In one embodiment, the electrical cables can be connected to one another by means of one or more collective terminals.

The control device is preferably configured and designed in such a way that it can control the heating system according to the invention. It controls the electrical voltage and/or electrical current used for the heating layer (or layers) in the case of an electrical heating element, or the amount of heated water or oil or other fluids used, and the speed at which the lines are supplied in the case of water- or fluid-based heating elements in order to achieve the desired temperature.

The control element contains at least one room air temperature sensor and can also be equipped with a floor temperature sensor. The control unit can be controlled by one of the two sensors, or by both sensors at the same time. In a preferred case, the control element is a thermostat that is installed in a wall of the room in which the heating system is located. With this design, it is recommended to lay an conduit pipe in the wall through which the heating system's cables are connected to the control element hidden in the wall.

The control system can be implemented in various forms for the purpose of the invention. For example, thermostats, actuators for central control programs, actuators for radio thermostats, etc. can be used. It is important that each room is equipped with at least one temperature sensor so that the temperature in each room can be controlled separately by at least one thermostat.

In the preferred embodiment of a heating element that has a heating layer that contains at least one carbon-based conductivity additive, the control device continuously measures the room temperature (air and/or floor temperature) during operation and compares the measured temperature value with a normal value/reference value set by the user. This can ensure that malfunctions of the heating system (e.g. overheating of a room while the room is simultaneously heated externally by the sun) are prevented and at the same time a constant temperature set by the user can be guaranteed. This also has a positive influence on the consumption values of the heating system, since only the energy required at the time is generated and made available to the room in the form of thermal radiation.

### Result: Function of the inventive heating system

The heating element of the heating system according to the invention has a heat radiation output of approx. 395 W/m² at a temperature of 22°C with an emission coefficient of 0.92 (according to radiation calculation of Stefan-Boltzmann). The reflection layer applied below the soundproofing spacer element means that, if an aluminum-coated reflection layer (emission coefficient of 0.04) is selected, approx. 96% of the heat can be reflected towards the floor covering. In this case, only 15.8W of heat energy reaches the subfloor and the majority of the heat generated reaches the floor covering. The reflection of the majority of the generated heat energy is only possible by the usage of the insulation-impact-sound-spacer-element and its stagnant air layer between the heating element and the reflection element. Reflection can only occur of there is a vacuum or air layer between a heating element and a reflection element (if not predominantly heat conduction occurs). This leads to the room heating up more quickly, which means that the running time of the heating element is significantly reduced in contrast to conventional heating systems that do not have the structure according to the invention. In short: heating system according to the invention allows for a more efficient way to use the generated heat energy for heating up a room. The result is reduced consumption values compared to conventional heating systems.

Measurement tests have shown that with the heating system according to the invention with a heating foil, in which the heating layer consists of at least one carbon-based conductivity additive printed throughout, the heating consumption in new buildings in KfW55 class (German building standard with an energy requirement of approx. 45 kWh/m²a) is approx. 20 to 30 kWh/m²a, about half as much as supposed to be.

A further advantage of this embodiment is that electricity from renewable sources such as photovoltaics or wind turbines can be used to operate the heating system. The heating system can therefore be operated without CO2 emissions.

In addition, there are no maintenance costs in the preferred embodiment described, as the system is not subject to any wear and tear.

### Kit for creating a heating system

With regard to the configurations of the components of the kit according to the invention, in particular the heating element, the insulation-impact- sound-spacer-element and the reflection element, reference is made in full to the above statements regarding the aspects of the invention.

### Uses and procedures

With regard to the embodiments of the method according to the invention for heating a room, reference is made in full to the above statements regarding the aspects of the invention, in particular the first aspect of the invention (heating system).

### Description of the figures

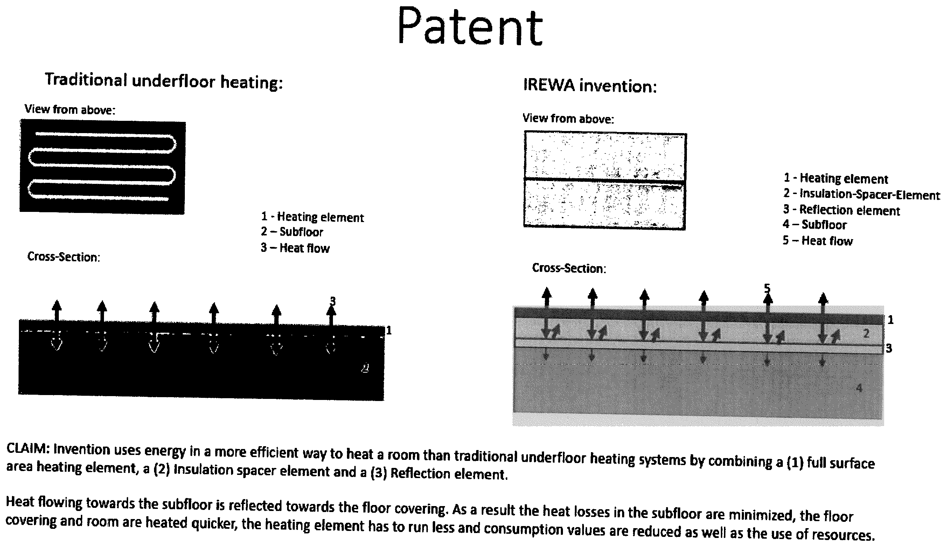

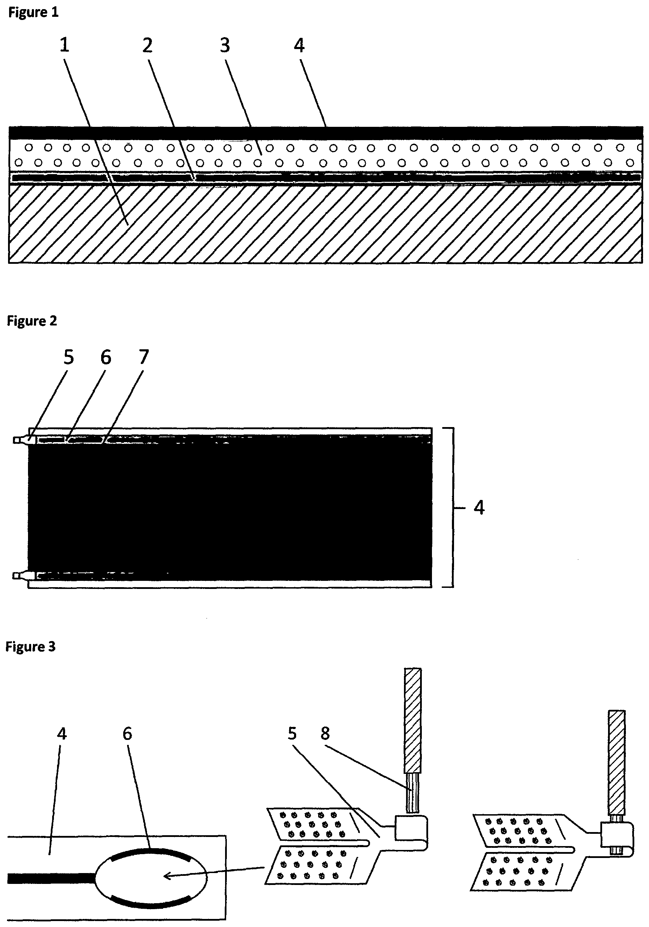

Figure 1 shows the cross-section of the heating system according to the invention, consisting of: heating element (4), insulation-impact-sound-spacer-element (3) and reflection element (2).
Figure 2 shows an example of a preferred heating element (4) which is equipped with a carbon coating in order to be able to generate full-surface low-temperature infrared radiation. It has contact elements (5) for the electrical connection to a voltage source, one or more conductive contact strips, usually made of copper and silver (6), and a carbon-based conductivity additive (7).
Figure 3 shows an example of a possibility for contacting method using a connection terminal (5), which is positioned on both sides around the copper conductor (6) of the heating element (4) and can then be pressed. In a next step, a cable (9) can be pressed into the area provided for this purpose and known to the person skilled in the art.
Figure 4 shows the cross section of a structure according to the invention in a preferred version with an insulation-impact-sound-spacer-element (3) based on a foam film with hardcover coating. Below is the reflection layer (2) and above the insulation-impact-sound-spacer-element is the heating element (4).
Figure 5 shows the cross section of an insulation-impact-sound-spacer-element (3) consisting of a preferred embodiment of a honeycomb core element with hexagonal honeycomb elements and one or more impact sound-minimizing carrier layers (10) applied over it.
Figure 6 shows the cross section of an insulation-impact-sound-spacer-element (3) in a preferred embodiment based on hexagonal honeycomb core elements in combination with a reflection layer (2) which is applied underneath the honeycomb core element.
Figure 7 shows the cross section of an insulation-impact-sound-spacer-element (3) in a preferred variant based on hexagonal honeycomb core elements in combination with a reflective layer (2) which is applied underneath the honeycomb core element on one or more carrier layers (10).

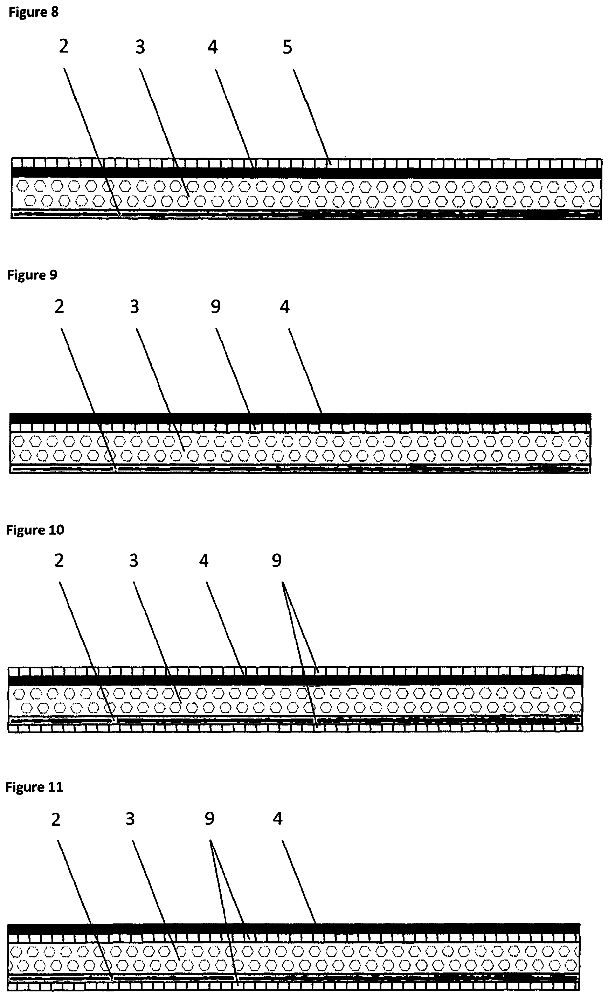

Figure 8 shows the cross section of the heating system according to the invention in a preferred variant with an insulation-impact-sound-spacer-element (3) based on hexagonal honeycomb core elements in the form of a plate. There is a reflective layer (2) on the underside. The heating element (4) is located above the honeycomb core plate and one or more carrier layers (10) above it.
Figure 9 shows the cross section of the heating system according to the invention in a preferred variant with an insulation-impact-sound-spacer-element (3) based on hexagonal honeycomb core elements in the form of a plate. There is a reflective layer (2) on the underside. One or more carrier layers (10) are located above the honeycomb core plate and the heating element (4) is located above it.
Figure 10 shows the cross section of the heating system according to the invention in a preferred variant with an insulation-impact-sound-spacer-element (3) based on hexagonal honeycomb core elements in the form of a plate. On the underside there is a reflection layer (2) which is applied to one or more carrier layers (10). Above the honeycomb core plate there is the heating element (4) and above it one or more carrier layers (10).
Figure 11 shows the cross section of the heating system according to the invention in a preferred variant with an insulation-impact-sound-spacer-element (3) based on hexagonal honeycomb core elements in the form of a plate. On the underside there is a reflection layer (2) which is applied to one or more carrier layers (10). Above the honeycomb core plate there is one or more carrier layers (10) and above it the heating element (4).

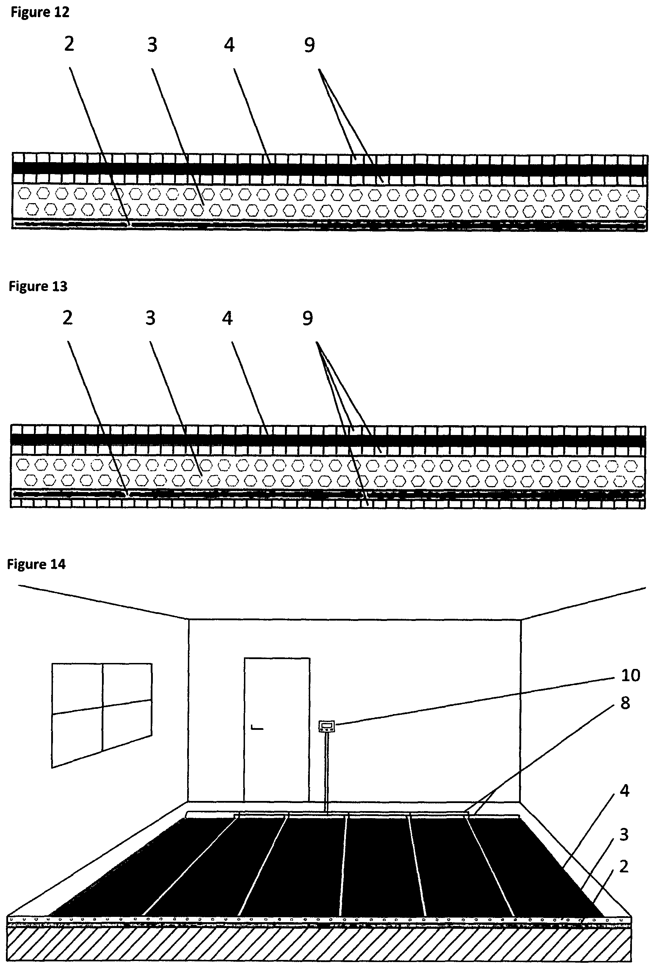

Figure 12 shows the cross-section of the heating system according to the invention in a preferred variant with an insulation-impact-sound-spacer-element (3) based on hexagonal honeycomb core elements in the form of a plate. On the underside there is a reflection layer (2). Above the honeycomb core plate there is one or more carrier layers (10), above that the heating element (4) and on top of that one or more carrier layers (10).
Figure 13 shows the cross-section of the heating system according to the invention in a preferred variant with an insulation-impact-sound-spacer-element (3) based on hexagonal honeycomb core elements in the form of a plate. On the underside there is a reflection layer (2), which is applied to one or more carrier layers (10). Above the honeycomb core plate there is one or more carrier layers (10), above that the heating element (4) and on top of that one or more carrier layers (10).
Figure 14 shows a room with the heating system according to the invention for producing a heating system which can be easily installed on the floor (subfloor or old floor covering) and uses the generated heat energy more efficiently to heat the room than traditional underfloor heating systems. It contains a reflection layer (2), an insulation-impact-sound-spacer-element (3) and a heating element (4) installed (almost) over the entire surface. The control unit (11) is visible on the wall, as well as the cables (9) with which the individual heating elements are connected to each other and to the control unit as well as the voltage source.

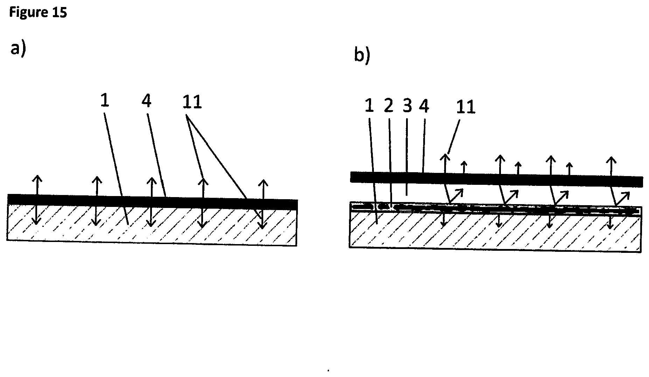

Figure 15 shows the schematic progression of thermal energy in conventional heating systems (a) and the heating system according to the invention (b). In conventional underfloor heating systems (a), heat is transferred to the floor covering and the subfloor by heat conduction. The colder the subfloor, the more thermal energy "flows" towards it. In the structure according to the invention (b), heat is transferred from the heating element (4) to the floor covering by heat conduction, too. In the direction of the subfloor, the primarily occurring heat transportation process is thermal radiation due to the use of the insulation impact sound spacer element. Most of the thermal radiation directed towards the subfloor is reflected by the reflection layer (2). As a result, a significantly larger proportion of the thermal energy generated in the heating element (4) reaches the floor covering and "losses" in the subfloor are minimized. Consequently, the floor covering and the room heat up more quickly and the heating element (4) has to run for a shorter time to distribute the same thermal energy in the room, as is the case with conventional underfloor heating systems (a). With the heating system according to the invention (b), the generated heat energy can be used more efficiently in the room and resources can be saved.

### Designation list

- 1: Subfloor
- 2: Reflection element
- 3: Insulation-impact-sound-spacer-element
- 4: Heating element
- 5: Contact element
- 6: Contacting conductor
- 7: Carbon-based conductivity additive
- 8: Cable
- 9: Carrier layer(s)
- 10: Control unit
- 11: Thermal energy flow
- a): Conventional underfloor heating system
- b): Structure according to the invention

## Claims

1. A heating system for heating a room consisting of
(i) a reflection element which is applied to the subfloor and is equipped to close cold bridges to the subfloor and in particular to reflect infrared radiation,
(ii) (ii) an insulation-impact-sound-spacer-element which minimizes impact sound, delays heat flow by heat conduction from the heating element in the direction of the subfloor and in particular simulates a stagnant air layer due to its structure of mostly air-enclosing chambers/bubbles, and
(iii) (iii) a heating element which, in a preferred embodiment, is equipped with a carbon coating in order to be able to generate full-surface low-temperature infrared radiation.
Components (i), (ii) and (iii) can be combined within one element, but can also consist of two, three or more separate elements.

2. A kit for creating a underfloor heating system which contains the following components:
1. A reflection element that is applied to the subfloor and is equipped to close cold bridges to the subfloor and in particular to reflect infrared radiation.
2. An insulation-impact-sound-spacer-element that minimizes impact sound, delays heat flow by heat conduction from the heating element in the direction of the subfloor and, in particular, simulates a stagnant air layer due to its structure of mostly air-enclosing bubbles/chambers.
3. A heating element, which in a preferred embodiment is equipped with a carbon coating in order to be able to generate full-surface low-temperature infrared radiation.
Components (1), (2) and (3) can be combined within one element, but can also consist of two, three or more separate elements.

3. A heating system according to claim 1 and 2, wherein the floor covering is in particular (real wood) parquet, laminate, vinyl, linoleum, ceramic coverings such as tiles or brick screed, cement screed, stone carpet, resin cast floors and all other coverings which can be used for a floor covering.

4. A method for producing a underfloor heating system which is comprising of the following steps:
a. Attaching a reflection element to the subfloor of a room, which is equipped to close cold bridges to the subfloor and in particular to reflect infrared radiation.
b. Attaching an insulation-impact-sound-spacer-element above the reflection element, which is equipped to minimize impact sound, to delay heat flow by heat conduction from the heating element in the direction of the subfloor and in particular to simulate a stagnant air layer due to its structure of mostly air-enclosing bubbles/chambers.
c. Attaching a heating element above the insulation-impact-sound-spacer-element, which in a preferred embodiment is equipped with a carbon coating in order to be able to generate full-surface infrared radiation.
d. Attaching a protective element which can be connected to the grounding of the house when used in wet rooms.

5. A heating system according to claims 1 to 4, wherein the installation of various floor coverings can be carried out in a floating or adhesive manner. In some cases it is advisable to use decoupling layers between the heating system according to the invention and the floor covering.

6. A method for heating a room comprising of the following steps:
a. Attaching a reflection element to the subfloor of a room, which is equipped to close cold bridges to the subfloor and in particular to reflect infrared radiation.
b. Attaching an insulation-impact-sound-spacer-element above the reflection element, which is equipped to minimize impact sound, to delay heat flow by heat conduction from the heating element in the direction of the subfloor and in particular to simulate a stagnant air layer due to its structure of mostly air-enclosing bubbles/chambers.
c. Attaching a heating element above the insulation-impact-sound-spacer-element, which in a preferred embodiment is equipped with a carbon coating in order to be able to generate full-surface infrared radiation.
d. Attaching a protective element when used in wet rooms.
e. Operating the heating element.
